Europäisches Patentamt

European Patent Office

Office européen des brevets

(19)

(11) Veröffentlichungsnummer: **0 352 527**
**A2**

(12)                    EUROPÄISCHE PATENTANMELDUNG

(21) Anmeldenummer: **89112476.0**

(51) Int. Cl.⁴: **B62B 3/10 , B62D 51/00**

(22) Anmeldetag: **07.07.89**

(30) Priorität: **09.07.88 DE 3823377**

(43) Veröffentlichungstag der Anmeldung:
**31.01.90 Patentblatt 90/05**

(84) Benannte Vertragsstaaten:
**DE ES FR GB IT**

(71) Anmelder: **LAFIS-LAGERTECHNIK FISCHER
GMBH + CO. KG.
Lessingstrasse 10
D-4200 Oberhausen 11(DE)**

(72) Erfinder: **Fischer, Horst
Lessingstrasse 10
D-4200 Oberhausen 11(DE)**

(74) Vertreter: **Michelis, Theodor, Dipl.-Ing.
Fliederweg 1
D-8000 München 90(DE)**

(54) **Schub- und Zug-Transportfahrzeug.**

(57) Ein Schub- und Zug-Transportfahrzeug, insbesondere für Einkaufswagen in Handelsgeschäften, weist erfindungsgemäß einen in Aufsicht U-förmigen, einen Einkaufswagen (20) umfaßbaren Grundrahmen auf, von dem jeder freie Schenkel (2, 3) am vorderen freien Ende mit einem, in einer starren Halterung (4, 5) geführten Laufrad (6) versehen ist, während mittig im hinteren, querliegenden Antriebsteil (1) ein Antriebsrad (8) mit einem integrierten Antrieb (10) schwenkbar geführt ist.

Fig.1

EP 0 352 527 A2

## Schub- und Zug-Transportfahrzeug

Die Erfindung bezieht sich auf ein Schub- und Zug-Transportfahrzeug, insbesondere für Einkaufswagen in Handelsgeschäften.

In Einzelhandelsgeschäften, insbesondere in großen Supermärkten, ist es üblich, daß die Kunden ihre Waren zunächst in Einkaufswagen ablegen, damit durch die Kasse fahren und dann die gekauften Waren in Transportbeutel umpacken oder mit dem Einkaufswagen direkt zu ihrem geparkten Fahrzeug fahren. Das Wiedereinsammeln und Zurückfahren dieser Einkaufswagen stellt dabei einen erheblichen Aufwand dar, selbst wenn eine große Anzahl von Einkaufswagen ineinandergeschoben werden können und als lange Schlage zurückgefahren werden, da hierfür stets mehrere Personen zum Schieben und Lenken dieser Einkaufswagen erforderlich sind.

Der Erfindung liegt daher die Aufgabe zugrunde, ein Transportfahrzeug zu schaffen, mit dem derartige Einkaufswagen eingesammelt und zur Ausgabestation zurückgefahren werden können, wobei auch bei langen Einkaufswagenschlangen nur eine Person zur Steuerung dieser Einkaufswagen und zum Transport ohne körperliche Kraftaufwendung erforderlich ist.

Zur Lösung dieser Aufgabe ist erfindungsgemäß vorgesehen, daß das Transportfahrzeug einen in Aufsicht U-förmigen, einen Einkaufswagen umfaßbaren Grundrahmen aufweist, von dem jeder Schenkel am vorderen freien Ende mit einem in einer starren Halterung geführten Laufrad versehen ist, während mittig im hinteren querliegenden Antriebsteil ein Antriebsrad mit einem integrierten Antrieb schwenkbar geführt ist.

Mit einem derartigen Transportfahrzeug kann also der letzte Wagen einer Schlange von Einkaufswagen umfaßt und die Schlange dann durch einfache Lenkung des Transportfahrzeuges an den Bestimmungsort gefahren werden.

Zweckmäßig ist es dabei, wenn der Grundrahmen einen querliegenden kastenförmigen Antriebsteil aufweist, an den das Antriebsrad angeflanscht ist und von dem von der seitlichen unteren Kante gabelförmig die zwei Schenkel mit den Laufrädern und von der seitlichen oberen Kante zwei den Korb eines Einkaufswagens umfassende Lenk- und Führungsarme ausgehen, deren vordere Enden einen Lenkhandgriff und Steuerknöpfe für den Fahrantrieb aufweisen.

Dabei ist es besonders zweckmäßig, wenn ein auf dem Antriebsteil einhängbarer mobiler Schaltkasten für den Fahrantrieb mit einem Verbindungskabel von mindestens der Länge einer maximal zu transportierender Reihe von ineinandergeschobenen Einkaufswagen vorgesehen ist. Damit kann der Fahrer der Einkaufswagenreihe mit dem Schaltkasten bis zum vorderen Einkaufswagen gehen, von dort aus den Fahrantrieb betätigen und von Hand die Einkaufswagenschlange lenken.

Weiterhin kann in dem Antriebsteil eine Rückhol-Seiltrommel mit einem auf dem Antriebsteil aufsteckbaren Befestigungshaken am Anfang des Seiles zum Einhaken am vordersten Einkaufswagen angeordnet sein. Damit ist es möglich, mit dem Transportfahrzeug eine Reihe von Einkaufswagen nicht nur zu schieben, sondern auch in entgegengesetzter Richtung zu ziehen, da alle Einkaufswagen über das Seil an dem Transportfahrtzeug angekoppelt sind.

Zur leichteren Ankopplung und um Schäden an den Einkaufswagen zu vermeiden, ist es ferner zweckmäßig, wenn querliegend zum Antriebsteil im oberen Bereich der innenliegenden Seite ein walzenförmiger, gepolsteter Schubkörper für die Einkaufswagen angeflanscht ist.

Zur optischen Sicherheit kann seitlich am Antriebsteil noch ein Halterungsmast mit einer Signallampe am oberen Ende befestigt sein.

Schließlich ist es noch möglich, seitlich am Antriebsteil Ankopplungslaschen vorzusehen, um damit auf der Antriebsseite Reinigungsgeräte in Form von Kehrwalzen oder Schneepflügen anzukoppeln, wodurch eine weitere Verwendungsmöglichkeit eines derartigen Transportgerätes gegeben ist.

Anhand einer schematischen Zeichnung sind Aufbau und Funktionsweise eines Ausführungsbeispiels nach der Erfindung näher erläutert. Dabei zeigen

Fig. 1 eine Seitenansicht eines derartigen Transportfahrzeuges und

Fig. 2 eine Ansicht von oben auf dieses Transportfahrzeug.

Wie man aus der Zeichnung ersieht, weist das Transportfahrzeug einen U-förmigen Grundrahmen mit einem querliegenden kastenförmigen Antriebsteil 1 und zwei gabelförmig verlaufenden, an den seitlichen unteren Kanten des Antriebsteils 1 angesetzten Schenkeln 2 und 3 auf. An den vorderen Enden dieser Schenkel 2 und 3 sind jeweils in einer starr an diese Schenkel 2 und 3 angeschraubten Halterung 4 und 5 zwei nicht lenkbare Laufräder geführt, wovon nur das in der Seitenansicht vordere Laufrad 6 zu sehen ist. Am Antriebsteil 1 ist zur Rückseite hin das Antriebsrad 8 in einem dreieckigen Ansatz 9 schwenkbar gelagert, wobei das Antriebsrad 8 einen integrierten, auf der Laufradwelle sitzenden Antrieb 10 aufweist.

An den oberen Seitenkanten des Antriebsteils 1 sind zwei schräg nach oben abragende Lenk- und Führungsarme 11 und 12 angeflanscht, die am vorderen Ende je einen Lenkbügel 13 bzw. 14 und Betätigungsknöpfe 15 und 16 bzw. 17 für den Fahrantrieb aufweisen.

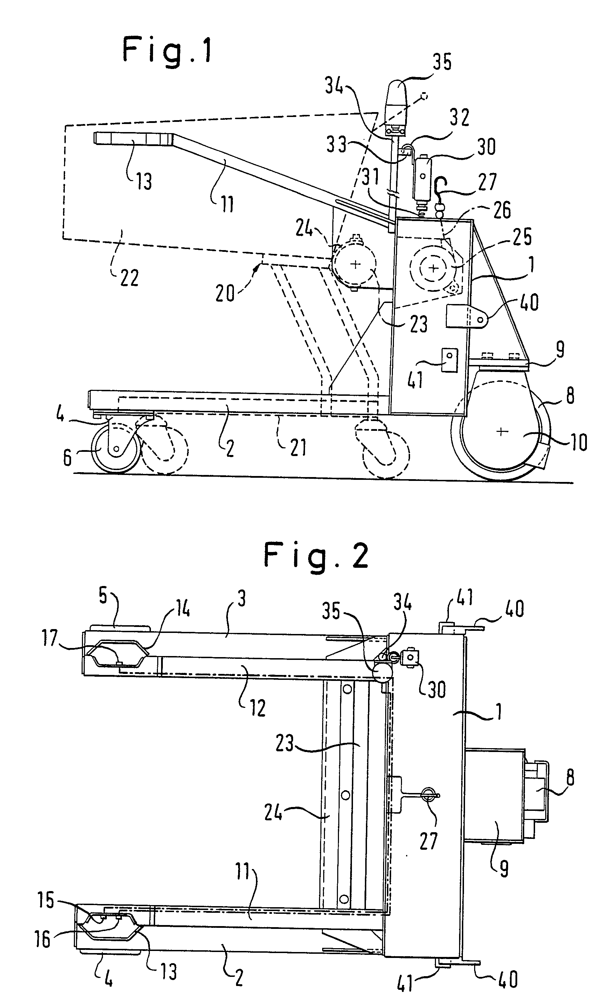

Wie man aus der Darstellung nach Fig. 1 ersieht, umfassen die unteren Schenkel 2 und 3 sowie die beiden oberen Lenk- und Führungsarme 11 und 12 einen gestrichelt eingezeichneten Einkaufswagen 20, einmal in Höhe des unteren Fahrwerkrahmens 21 und einmal in Höhe des Korbes 22.

Zur Abstützung gegenüber dieser Einkaufswagen 20 ist auf der Schubseite des Antriebsteils 1 in Höhe der Unterkante der Einkaufswagenkörbe 22 ein walzenförmiger Schubkörper 23 angeordnet, der auf seiner den Einkaufswagen 20 zugewandten Außenseite eine Polsterung 24 aufweist, um damit einen weichen Anschlag auf die Einkaufswagen 20 sicherzustellen.

Bei dem Transport einer geringeren Anzahl von ineinandergeschobenen Einkaufswagen 20 kann das Transportfahrzeug seitlich an einem der Handgriffe 13 und 14 angefaßt und gelenkt und über die Steuerknöpfe 15 und 16 bzw. 17 gesteuert werden.

Um mit einer Gruppe von Einkaufswagen nicht nur in Schubrichtung, sondern auch in Zugrichtung fahren zu können, ist in das Antriebsteil 1 eine selbstaufrollende Seiltrommel 25 integriert, aus der ein Seil 26 mit einem Haken 27 am vorderen Ende auf der Oberseite des Antriebsteiles 1 festgelegt werden kann. Dieser Haken 27 kann dann in den vordersten der zu transportierenden Einkaufswagen eingehängt werden, wobei das Seil über die Seiltrommel 25 gespannt wird. Damit sind dann die Einkaufswagen fest an das Transportfahrzeug angekoppelt, so daß dieses auch in Zugrichtung fahren und die Einkaufswagen hinter sich herziehen kann.

Für den Transport einer langen Reihe ineinandergeschobener Einkaufswagen, deren Fahrtrichtung nicht mehr von den Lenkrahmen 11 oder 12 aus gesteuert werden kann, ist ein mobiles Steuergerät 30 vorgesehen, das über ein entsprechend langes Kabel 31 mit dem Antriebsteil 1 verbunden ist. Der Fahrer kann dann mit diesem Steuergerät 30 bis zum vorderen Ende der Einkaufswagenschlange vorgehen, über das Steuergerät 30 den Fahrantrieb ein- und ausschalten und mit Hand dann die Fahrtrichtung der Einkaufswagenschlange bestimmen. Damit ist es auf einfache Weise möglich, auch eine große Anzahl von ineinandergeschobener Einkaufswagen von nur einem Mann aus ohne große Kraftanstrengung zu transportieren und an den Bestimmungsort zu fahren.

Dieses Steuergerät 30 wird zweckmäßigerweise bei Nichtbenutzung über einen Haken 32 in eine Halterung 33 eingehängt, die seitlich am Antriebsteil 1 an einem Mast 34 befestigt ist, der am oberen Ende eine bei Fahrbetrieb blinkende Signallampe 35 trägt.

Seitlich am Antriebsteil 1 können darüber hinaus noch Laschen 40 bzw. 41 festgelegt sein, an die auf der Antriebsradseite laufende, nicht näher dargestellte Reinigungsgeräte in Form von Kehrwalzen oder Schneepflügen angekoppelt werden können. Diese Reinigungsgeräte können dann ebenfalls von den Lenkarmen 11 oder 12 bzw. den Handgriffen 13 oder 14 und den entsprechenden Steuerknöpfen 15 und 16 bzw. 17 gelenkt und gesteuert werden.

Damit ergibt sich also insgesamt ein universell verwendbares Transportfahrtzeug, mit dem einmal Einkaufswagen auch in größerer Anzahl eingesammelt verfahren werden können, wobei ein Transport sowohl in Schub- als auch in Zugrichtung möglich ist und andererseits kann das Transportfahrzeug für weitere Anwendungen, wie beispielsweise als Kehrwalze oder Schneepflug herangezogen werden.

## Ansprüche

1. Schub- und Zug-Transportfahrzeug, insbesondere für Einkaufswagen in Handelsgeschäften, dadurch gekennzeichnet, daß das Transportfahrzeug einen in Aufsicht U-förmigen, einen Einkaufswagen (20) umfassbaren Grundrahmen aufweist, von dem jeder Schenkel (2, 3) am vorderen freien Ende mit einem in einer starren Halterung (4, 5) geführten Laufrad (6) versehen ist, während mittig im hinteren, querliegenden Antriebsteil (1) ein Antriebsrad (8) mit einem integrierten Antrieb (10) schwenkbar geführt ist.

2. Transportfahrzeug nach Anspruch 1, dadurch gekennzeichnet, daß der Grundrahmen einen querliegenden, kastenförmigen Antriebsteil (1) aufweist, an den das Antriebsrad (8) angeflanscht ist und von dem von der seitlichen unteren Kante gabelförmig die zwei Schenkel (2, 3) mit den Laufrädern (6) und von der seitlichen oberen Kante (2) den Korb (22) eines Einkaufswagens (20) umfassende Lenk- und Führungsarme (11, 12) aufgehen, deren vordere Enden einen Lenkhandgriff (13, 14) und Steuerknöpfe (15, 16; 17) für den Fahrantrieb (10) aufweisen.

3. Transportfahrzeug nach Anspruch 1 oder 2, dadurch gekennzeichnet, daß ein auf den Antriebsteil (1) einhängbares mobiles Steuergerät (30) für den Fahrantrieb (10) mit einem Verbindungskabel (31) von mindestens der Länge einer maximal zu transportierenden Reihe von ineinandergeschobenen Einkaufswagen (20) vorgesehen ist.

4. Transportfahrzeug nach Anspruch 1 oder 2, dadurch gekennzeichnet, daß in das Antriebsteil (1) eine Rückhol-Siebtrommel (25) mit einem auf den Antriebsteil (1) aufsteckbaren Befestigungshaken (27) am vorderen Ende des Seils (26) zum Einhaken am vordersten Einkaufswagen angeordnet ist.

5. Transportfahrzeug nach Anspruch 1 oder 2, dadurch gekennzeichnet, daß querliegend zum Antriebsteil (1) im oberen Bereich der innenliegenden Seite ein walzenförmiger, gepolsteter Schubkörper (23) für die Einkaufswagen (20) angeflanscht ist.

6. Transportfahrzeug nach Anspruch 1 oder 2, dadurch gekennzeichnet, daß seitlich am Antriebsteil (1) ein Halterungsmast (34) mit einer Signallampe (35) am oberen Ende sowie eine Halterungslasche (33) für das Steuergerät (30) befestigt ist.

7. Transportfahrzeug nach Anspruch 1 oder 2, dadurch gekennzeichnet, daß seitlich am Antriebsteil (1) Reinigungsgeräte in Form von Kehrwalzen oder Schneepflügen aufnehmende Ankopplungslaschen (40, 41) vorgesehen sind.

# Fig.1

# Fig.2